# EUROPEAN PATENT APPLICATION

(11) **EP 3 627 524 A1**
(43) Date of publication of application: **25.03.2020**
(21) Application number: 18813268.2
(22) Date of filing: 25.01.2018
(51) Int. Cl.: H01F 27/28, H01F 27/30, H01F 17/00, H02M 7/48, H02M 3/335

(54) **INDUCTOR AND POWER-SWITCHING CIRCUIT**

(30) Priority: 09.06.2017 CN 201710433222
(71) Applicant: Huawei Technologies Co., Ltd., Longgang District Shenzhen, Guangdong 518129 (CN)
(72) Inventor: XU, Shichao, Shenzhen Guangdong 518129 (CN)
(74) Representative: Goddar, Heinz J.
(86) International application number: PCT/CN2018/074189
(87) International publication number: WO 2018/223715

(57) **Abstract**

An inductor is disclosed. The inductor includes a magnetic core and a coil. The coil includes a first part coil and a second part coil. The first part coil is conductive paths disposed on a circuit board. The second part coil is a group of conductors plug-connected to the circuit board. The conductive paths of the circuit board and the conductors plug-connected to the circuit board are interconnected. For the inductor, the conductors are plug-connected to the circuit board, to form a continuous conductive winding wound around the magnetic core. In the inductor, different types of conductive media are combined to form the coil of the inductor, so that a repeated wire winding action required of a single coil does not need to be performed in a manufacturing process, and the magnetic core does not need to be cut and bonded in the manufacturing process.

## Description

### TECHNICAL FIELD

Embodiments of the present invention relate to the circuit field, and more specifically, to an inductor and a power supply conversion circuit.

### BACKGROUND

In integrated circuits or power supply circuits of current various electronic devices, integrated inductors or inductor components are widely used. A magnetic induction feature of the inductor or the inductor component is used to affect a current and a voltage of the circuit. Basic components of a common inductor are a magnetic core and a winding. The winding is usually a metal wire wound around the magnetic core. Currently, such a wire wound inductor is usually manufactured by a manufacturer by using a magnetic core, an enameled wire, and an auxiliary material of glue. The metal wire is repeatedly wound around the magnetic core a plurality of times in a manufacturing process. The process is complex and time-consuming.

### SUMMARY

Embodiments of the present invention provide an inductor, and there is no need to use a metal wire to repeatedly wind around a magnetic core a plurality of times, to simplify a manufacturing process and shorten a manufacturing time of the inductor.

According to a first aspect, an embodiment of the present invention provides an inductor, where the inductor includes a magnetic core and a coil, the coil includes a first part coil and a second part coil, the first part coil is conductive paths disposed on a circuit board, the second part coil is a group of conductors plug-connected to the circuit board, and the conductive paths of the circuit board and the conductors plug-connected to the circuit board are interconnected. The conductors may be conductively connected to the conductive paths through jacks on the circuit board, or may be connected to the conductive paths by using connectors.

In the inductor, a continuous conductive winding wound around the magnetic core is formed by using a combined connection between the conductors and the circuit board. In this way, different types of conductive media are combined to form the coil of the inductor, so that a repeated wire winding action required of a single coil does not need to be performed in a manufacturing process, to simplify the manufacturing process of the inductor, and shorten a manufacturing time.

With reference to the first aspect, in a first possible implementation of the first aspect, the circuit board is provided with a plurality of via holes for insertion of the conductors, the conductors are inserted in the via holes, and the conductors and the conductive paths are interconnected. The via holes are further located on two sides of vertical projection of the magnetic core on the circuit board, and are tangential to or overlap with the vertical projection. In addition, the conductive paths of the circuit board are parallel to each other, and the conductive path formed by each conductive layer of the circuit board is conductively connected to two adjacent conductors.

The via holes are provided for insertion of the conductors, to rapidly mount the conductors and form a complete coil through connection.

With reference to the first aspect, in a second possible implementation of the first aspect, the magnetic core is of a ring shape, and the conductors include a plurality of U-shaped wires. The U-shaped wires separately surround an outer ring surface, an upper ring surface, and an inner ring surface of the magnetic core, and are respectively connected to the conductive paths of the circuit board, to form the coil of the inductor wound around the magnetic core.

For a scenario of the ring magnetic core, the U-shaped wires are combined with the conductive paths, to form a coil, so that a repeated wire winding action may be avoided, and the ring magnetic core does not need to be cut or bonded in the manufacturing process, thereby simplifying the manufacturing process of the inductor. In a mounting process, all wires may alternatively be first fastened together by using a mounting fastener, and then inserted in the via holes of the circuit board at a time, thereby further increasing mounting efficiency.

With reference to the first aspect, in a third possible implementation of the first aspect, two ends of a U-shaped opening of each of the conductors are inserted in two via holes of the circuit board, and the two via holes are connected to conductive paths formed by two different conductive layers of the circuit board. A cross-sectional width of a part that is of the conductor and that surrounds the outer ring surface of the magnetic core is less than that of a part surrounding the inner ring surface of the magnetic core, and a cross-sectional width of a part that is of the conductor and that surrounds the upper ring surface gradually decreases from the outer ring surface to the inner ring surface.

The conductors have different cross-sectional widths, to arrange maximum-density coils on surfaces of the magnetic core, to maximize induction efficiency.

With reference to the first aspect, in a fourth possible implementation of the first aspect, the circuit board includes two circuit boards, and the conductors include a plurality of straight wires. The straight wires are separately against an outer ring surface and an inner ring surface of the magnetic core, and are respectively connected to the conductive paths of the two circuit boards, to form the coil of the inductor wound around the magnetic core. The two circuit boards are located on upper and lower surfaces of the magnetic core, and the conductors are located between the two circuit boards and surround around the magnetic core.

With reference to the first aspect, in a fifth possible implementation of the first aspect, the magnetic core may be of a ring shape, a long-strip shape, or an E shape, and surfaces of the conductors have an insulation coating to prevent the conductors from being conducted and causing short-circuit. The conductors may alternatively be enameled wires.

According to a second aspect, an embodiment of the present invention provides an inverter circuit, and the inverter circuit uses the inductor according to the first aspect to perform filtering. The inverter circuit includes four diodes D1, D2, D3, and D4 sequentially connected in series between a positive bus and a negative bus, four switching transistors Q1, Q2, Q3, and Q4 that correspond one-to-one to the four diodes and that are connected in parallel on two ends of the four diodes, two capacitors C1 and C2 connected in series between the positive bus and the negative bus, a filter inductor L, and a filter capacitor C. One end of the filter inductor L is connected to an end at which D2 and D3 are interconnected, the other end is connected to a load, the filter capacitor C is connected in parallel on two ends of the load, one end of the filter capacitor C is connected to the other end of the filter inductor L, and the filter inductor L is the inductor according to the first aspect.

According to a third aspect, an embodiment of the present invention provides a power supply conversion circuit, and the power supply conversion circuit uses the inductor according to the first aspect as a component for current conversion and voltage conversion. The power supply conversion circuit includes a direct current power supply, at least one switch unit, and at least one induction unit. The at least one induction unit corresponds one-to-one to the at least one switch unit, each of the at least one induction unit is connected to the direct current power supply by using a corresponding switch unit, and each induction unit includes the inductor according to the first aspect.

In the embodiments of the present invention, a plurality of discontinuous conductors of the inductor cooperate with and are connected to the conductive paths of the circuit board, to form the coil of the inductor wound around the magnetic core. Because a winding operation is not required in the manufacturing process, manufacturing steps and processes of such an inductor are significantly simplified. In addition, because the conductors are independent of each other, a problem of short-circuit between turns cannot occur. Therefore, reliability of the inductor can be improved while costs of the inductor are reduced.

### BRIEF DESCRIPTION OF DRAWINGS

FIG. 1 is a three-dimensional diagram of a structure of an inductor according to an embodiment of the present invention;
FIG. 2 is a three-dimensional exploded view of a structure of an inductor according to an embodiment of the present invention;
FIG. 3 is a three-dimensional diagram of a structure of an inductor according to another embodiment of the present invention;
FIG. 4 is a three-dimensional exploded view of a structure of an inductor according to another embodiment of the present invention;
FIG. 5 is a diagram of an inverter circuit of an inductor according to some embodiments of the present invention; and
FIG. 6 is a diagram of a power supply conversion system using an inductor according to some embodiments of the present invention.

### DESCRIPTION OF EMBODIMENTS

The following clearly and completely describes the technical solutions in the embodiments of the present invention with reference to the accompanying drawings in the embodiments of the present invention.

In the embodiments of the present invention, an inductor is used as an electronic component, and may be applied to various conversion circuits related to a current or a voltage, for example, a power supply conversion circuit, or may be applied to other circuits, for example, an inverter circuit, a rectifier circuit, a power conversion circuit, and a voltage conversion circuit. This is not limited in the embodiments of the present invention.

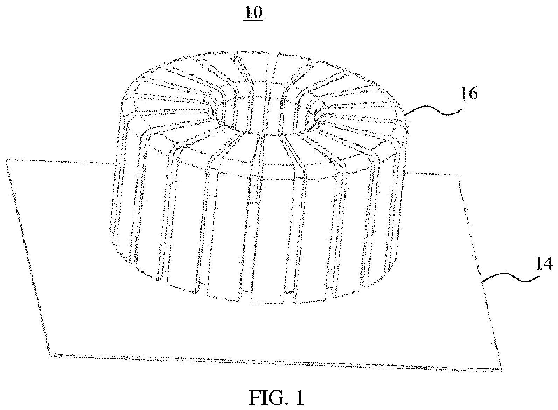

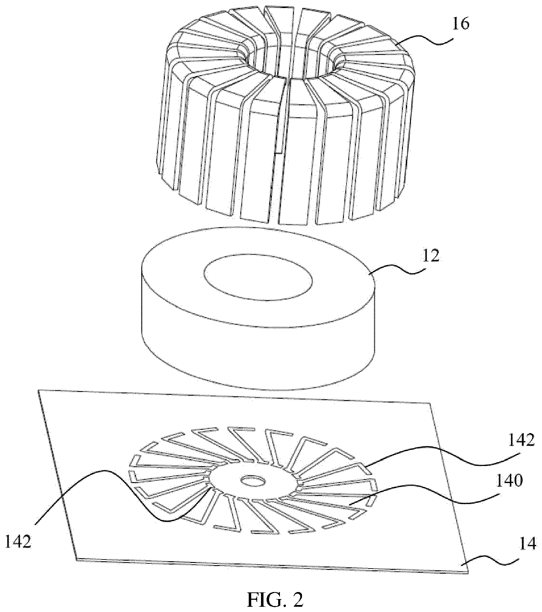

As shown in FIG. 1 and FIG. 2, in some embodiments of the present invention, an inductor 10 includes a magnetic core 12, a first part coil, and a second part coil. The first part coil is a plurality of conductive paths 140 formed by conductive layers of a circuit board 14. The second part coil is a group of conductors 16. The conductive paths 140 formed by the conductive layers of the circuit board 14 and the conductors 16 are interconnected, to form a continuous conductive line wound around the magnetic core 12.

In some embodiments of the present invention, the circuit board may be a printed circuit board. The conductive paths formed by the conductive layers of the circuit board are circuit board lines formed by a metal conductive layer printed on a surface of the circuit board or circuit board lines formed by a metal conductive interlayer embedded inside the circuit board. The plurality of conductive paths 140 include a plurality of straight conductive paths connected to the group of conductors 16. The second part coil is a plurality of conductors 16 independent of the circuit board. To be specific, different from the first part coil, the second part coil is not a printed circuit formed on the circuit board 14, but is a group of independently formed conductors 160. Each conductor 16 is conductively connected to two conductive paths 140 on the circuit board 14. Each conductor 16 surrounds some surfaces of the magnetic core, and the plurality of conductive paths 140 surround the other surfaces of the magnetic core 12. In some embodiments of the present invention, the conductors 16 may be embedded in some carriers for mounting. The carriers may be rubber rings for buckling and fastening, plastic mounting bodies, flexible circuit boards, and the like.

In some embodiments of the present invention, the magnetic core 12 is an annular magnetic core. In other embodiments, the magnetic core 12 may alternatively be of various shapes, such as a U shape, an E shape, a rectangular ring, and a long-strip shape. It may be understood that for ease of describing a specific implementation of the present invention, in some embodiments of the present invention, for example, the magnetic core is the annular magnetic core 12. However, a specific shape of the magnetic core is not limited. The magnetic core 12 includes an outer ring surface, an inner ring surface, and upper and lower ring surfaces that are opposite to each other.

The conductors 16 include a plurality of U-shaped wires. The U-shaped wires separately surround the outer ring surface, the upper ring surface, and the inner ring surface of the magnetic core 12, and are respectively connected to the plurality of conductive paths 140 of the circuit board 14, to form a coil of the inductor 10 continuously wound around the magnetic core 12.

The circuit board 14 is provided with a plurality of via holes 142. The conductive paths 140 formed by the conductive layers of the circuit board 14 are disposed on the circuit board 14. In addition, it is seen from a surface view of the circuit board 14 that two ends of the conductive path 140 formed by each conductive layer of the circuit board 14 are connected to two via holes 142.

Two ends of a U-shaped opening of each conductor 16 are inserted in two via holes 142 of the circuit board 14, and the two via holes 142 are connected to two different conductive paths 140. The via holes 142 on the circuit board 14 are located on two sides of vertical projection of the magnetic core 12 on the circuit board 14, and are close to the vertical projection, or even overlap with a small part of the vertical projection. The conductive paths 140 formed by the conductive layers of the circuit board 14 extend from an interior of the circuit board 14 to outside. The conductive path 140 formed by each conductive layer of the circuit board 14 is conductively connected to two adjacent conductors 16.

It may be understood that in some embodiments, the conductors 16 are not directly connected to the conductive paths 140 of the circuit board 14 through the via holes 142, and may be connected to the conductive paths 140 on the circuit board 14 by using connectors. To be specific, the connectors separately connected to the conductors 16 and the conductive paths 140 are disposed, so that the conductors 16 are conductively connected to the conductive paths 140.

The conductor 16 may be a wire made of a highly conductive metal, for example, copper, aluminum, and silver. An outer surface of the conductor 16 is coated with an insulation layer, to prevent a current loss or prevent the metal conductors 16 from contacting each other and causing short-circuit. In some embodiments, the conductors 16 are enameled wires. A cross-sectional width of a part that is of the conductor 16 and that is close to the outer ring surface 120 of the magnetic core 12 is less than that of a part close to the inner ring surface of the magnetic core 12, and a cross-sectional width of a part that is of the conductor 16 and that is close to the upper ring surface gradually decreases from the outer ring surface to the inner ring surface, to maximize, in combination with a ring feature of the magnetic core 12, an area of the magnetic core 12 covered by the coil of the inductor 10.

In this embodiment of the present invention, a plurality of discontinuous conductors 16 of the inductor 10 cooperate with and are connected to the conductive paths 140 formed by the conductive layers of the circuit board 14, to form the coil of the inductor 10 wound around the magnetic core 12. Because a winding operation is not required in a manufacturing process, the magnetic core does not need to be cut, so that manufacturing steps and processes of such an inductor are significantly simplified. In addition, because the conductors 16 are independent of each other, a problem of short-circuit between turns cannot occur. Therefore, reliability of the inductor can be improved while manufacturing costs of the inductor are reduced.

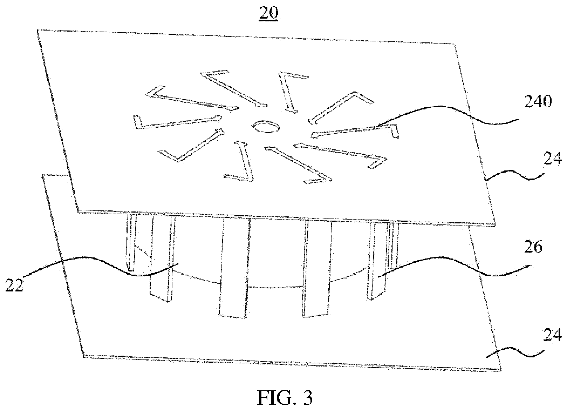

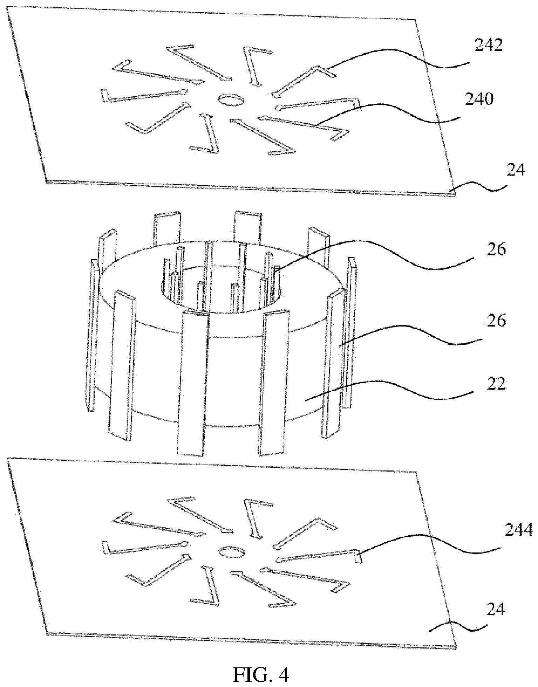

As shown in FIG. 3 and FIG. 4, in some other embodiments of the present invention, an inductor 20 includes a magnetic core 22, a first part coil, a second part coil, and two sub-circuit boards 24. The first part coil is conductive paths 240 formed by conductive layers disposed on the two sub-circuit boards 24. The second part coil is a group of conductors 26. The conductive paths 240 formed by the conductive layers of the two sub-circuit boards 24 and the conductors 26 are interconnected, to form a continuous conductive line wound around the magnetic core 22.

In some other embodiments of the present invention, the magnetic core 22 may be an annular magnetic core. In another embodiment, the magnetic core 22 may be of various shapes, such as another ring shape, a U shape, an E shape, and a long-strip shape. It may be understood that for ease of describing a specific implementation of the present invention, in some embodiments of the present invention, the annular magnetic core 22 is used as an example. However, a specific shape of the magnetic core is not limited. The magnetic core 22 includes an outer ring surface, an inner ring surface, and upper and lower ring surfaces that are opposite to each other.

The conductors 26 include a plurality of long-strip or straight wires. The wires are separately close to the outer ring surface and the inner ring surface of the magnetic core 22, and are respectively connected to the conductive paths 240 formed by the conductive layers of the two sub-circuit boards 24, to form a coil of the inductor 20 wound around the magnetic core 22. The two sub-circuit boards 24 respectively abut against the upper and lower ring surfaces. Because an area of the inner ring surface of the magnetic core 22 is less than an area of the outer ring surface of the magnetic core 22, a cross-sectional width of the wires abutting against the inner ring surface is less than a cross-sectional width of the wires abutting against the outer ring surface, to match the inner and outer ring surfaces having different areas, thereby covering a largest area of the magnetic core.

Each of the two sub-circuit boards 24 is provided with a plurality of via holes 242 and 244. The conductive paths 240 formed by the conductive layers of the two sub-circuit boards 24 are disposed on an upper surface and a lower surface of the circuit board 24. In addition, it is seen from a surface view of the circuit board 24 that two ends of the conductive path 240 formed by each conductive layer of the circuit board 24 are connected to two via holes 242 and 244.

Two ends of each conductor 26 are separately inserted in upper and lower two via holes 242 and 244 on the two sub-circuit boards 24, and the upper and lower two via holes 242 and 244 are respectively connected to two conductive paths 240 that are on the upper and lower two sub-circuit boards 24 and that are parallel to each other. The via holes 242 and 244 on the two sub-circuit boards 24 are located on two sides of vertical projection of the magnetic core 22 on the circuit board 24, and are close to the vertical projection, or even overlap with a small part of the vertical projection. The upper and lower conductive paths 240 of the two sub-circuit boards 24 correspond to and are parallel to each other one by one, and extend from inside to outside. The conductor 26 is made of a highly conductive metal, for example, copper, aluminum, and silver. An outer surface of the conductor 26 is coated with an insulation layer, to prevent a current loss or prevent the metal conductors 26 from contacting each other and causing short-circuit. In some embodiments, the conductors 26 are enameled wires.

In this embodiment of the present invention, a plurality of discontinuous conductors 26 of the inductor 20 cooperate with and are connected to the conductive paths 240 formed by the conductive layers of the two sub-circuit boards 24, to form the coil of the inductor 20 wound around the magnetic core 22. Because a winding operation is not required in a manufacturing process, the magnetic core does not need to be cut, so that manufacturing steps and processes of such an inductor are significantly simplified. In addition, because the conductors 26 are independent of each other, a problem of short-circuit between turns cannot occur. Therefore, reliability of the inductor can be improved while costs of the inductor are reduced.

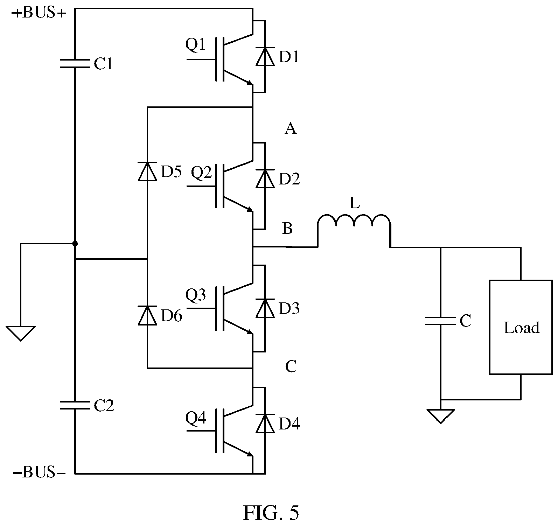

In some embodiments of the present invention, the foregoing inductor 10/20 is used as a filter or a rectifier inductor in an inverter circuit or a rectifier circuit. It may be understood that the foregoing inductor 10/20 is not limited to a specific application scenario, and may be used as a single inductor, or may be used as a coupled inductor, or even may be integrated in a terminal and used as an inductor of a power supply conversion system. An inverter circuit shown in FIG. 5 includes four diodes D1, D2, D3, and D4 sequentially connected in series between a positive bus and a negative bus (BUS+ and BUS-), four switching transistors Q1, Q2, Q3, and Q4 that correspond one-to-one to the four diodes and that are connected in parallel on two ends of the four diodes, two capacitors C1 and C2 connected in series between the positive bus and the negative bus, a filter inductor L, and a filter capacitor C. One end of the filter inductor L is connected to an end at which D2 and D3 are interconnected, and the other end is connected to a load.

The filter capacitor C is connected in parallel on two ends of the load, one end of the filter capacitor C is connected to the other end of the filter inductor L, and the other end of the filter capacitor C is grounded.

A middle point at which the two capacitors C1 and C2 are interconnected is also grounded.

The inverter circuit is configured to convert a direct current into an alternating current. On/off of Q1 to Q4 is controlled by modulating a control signal, to output a multi-level voltage. The multi-level voltage is converted into an alternating current after the multi-level voltage is collated by the filter inductor L and the capacitor C.

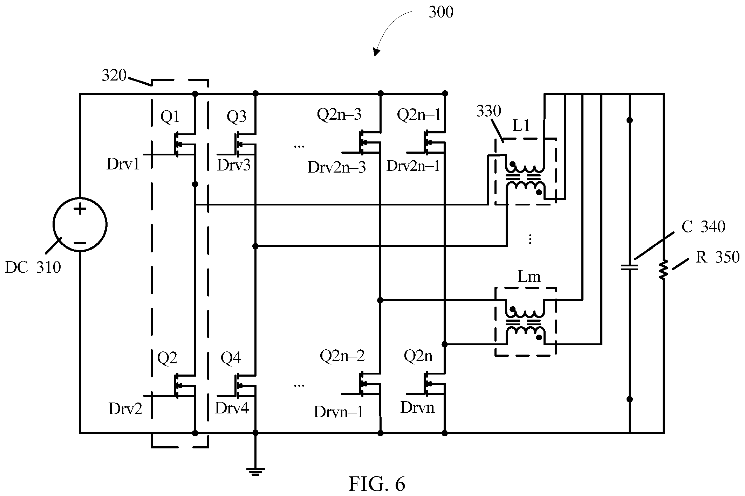

As shown in FIG. 6, the power supply conversion system 300 includes a direct current (Direct Current, DC) power supply 310, at least one switch unit 320, at least one induction unit 330, a filter capacitor 340, and a load 350. A working principle of a circuit of the power supply conversion system is a multi-phase interleaved buck circuit. Every two phases of inductors are coupled, to form an induction unit. One or more induction units are connected in parallel, to output energy to the load. Two switching transistors (for example, switching transistors Q1 and Q2) are connected in series, to form a switch unit. Each switching transistor is connected to a controlled IC by using a drive (Drive, DRV), to control on/off of the switching transistors. The at least one switch unit corresponds one-to-one to the at least one induction unit. Each induction unit is connected to the direct current power supply by using a corresponding switch unit. The induction unit may include the coupled two-phase inductors described above.

For ease of understanding and description, one induction unit (namely, a two-phase inductor, for example, L1 shown in FIG. 6) is used as an example below, to describe a working principle of the induction unit in detail.

A first-phase power supply conversion circuit includes a first switch unit (for example, a switch unit including the switching transistors Q1 and Q2) and one phase of a first induction unit (for example, the inductor L1). When the switching transistor Q1 is on, a direct current flows through the one phase that is of the induction unit and that is connected to the switching transistor Q1, and a current of the inductor starts to increase, and supplies power to a load R after the current is filtered by the capacitor C; after Q1 is off, Q2 starts to be on, a voltage of the filter capacitor is reversely applied to the inductor, and the current of the inductor starts to decrease, to complete freewheeling in the buck conversion circuit. Similarly, a second-phase power supply conversion circuit includes switching transistors Q3 and Q4 and the other phase of the induction unit L1. When the switching transistor Q3 is on, a direct current flows through the other phase that is of the induction unit and that is connected to the switching transistor Q4, and a current of the inductor starts to increase, and supplies power to the load R after the current is filtered by the capacitor C; after Q3 is off, Q4 starts to be on, a voltage of the filter capacitor is reversely applied to the inductor, and the current of the inductor starts to decrease, to complete freewheeling in the buck conversion circuit. The foregoing two-phase buck power supply conversion parts Q1, Q2, Q3, and Q4, and the induction unit L1 form a power supply conversion unit. In other words, the first-phase power supply conversion circuit and the second-phase power supply conversion circuit together form the power supply conversion unit. Output loads of the power supply conversion unit have different requirements on a current, so that one or more power supply conversion units may be connected in parallel to implement power conversion.

It should be understood that the multi-phase interleaved buck circuit listed above is merely an example, and does not limit the present invention. For example, the coupled two-phase inductor in this embodiment of the present invention may also be applied to a multi-phase interleaved boost circuit. This is not particularly limited in the present invention.

It may be clearly understood by a person skilled in the art that, for the purpose of convenient and brief description, for a detailed working process of the system, apparatus, and unit, refer to a corresponding process in the method embodiments. Details are not described herein again.

The foregoing descriptions are only specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An inductor, wherein the inductor comprises a magnetic core and a coil, the coil comprises a first part coil and a second part coil, the first part coil is a plurality of conductive paths formed by conductive layers of a circuit board, the second part coil is a plurality of conductors independent of the circuit board, and the plurality of conductive paths of the circuit board are conductively connected to the plurality of conductors, to form the coil that is continuous conductive and that is wound around the magnetic core.

2. The inductor according to claim 1, wherein the circuit board is provided with a plurality of via holes, and the plurality of conductors are conductively connected to the plurality of conductive paths through the plurality of via holes.

3. The inductor according to claim 2, wherein the plurality of via holes are provided on the plurality of conductive paths, and at least some of the plurality of conductors are inserted in the plurality of via holes, to form conductive connections to the plurality of conductive paths.

4. The inductor according to claim 3, wherein the plurality of via holes are located on two sides of vertical projection of the magnetic core on the circuit board, and are tangential to or overlap with the vertical projection.

5. The inductor according to any one of claims 1 to 4, wherein the plurality of conductive paths extend from inside to outside, and each of the plurality of conductive paths is conductively connected to two of the plurality of conductors.

6. The inductor according to any one of claims 1 to 5, wherein the plurality of conductors comprise a plurality of U-shaped wires, each of the plurality of U-shaped wires surrounds some surfaces of the magnetic core, and the plurality of conductive paths surround the other surfaces of the magnetic core.

7. The inductor according to claim 6, wherein two ends of an opening of each of the plurality of U-shaped wires are separately inserted in two of the plurality of via holes and are conductively connected to two of the plurality of conductive paths through the two via holes.

8. The inductor according to claim 6 or 7, wherein a cross-sectional width of a part that is of each of the U-shaped wires and that surrounds a side surface of the magnetic core is less than that of a part surrounding another opposite side surface, a cross-sectional width of a part that is of each of the U-shaped wires and that surrounds a top surface of the magnetic core gradually increases from the side surface of the magnetic core to the another opposite side surface, and the part on the top surface of the magnetic core is connected to the side surface and the another opposite side surface of the magnetic core.

9. The inductor according to any one of claims 1 to 5, the circuit board comprises two sub-circuit boards, the two sub-circuit boards are independent of each other, the plurality of conductors comprise a plurality of straight wires, and two ends of each of the plurality of straight wires are separately inserted in two via holes provided on the two sub-circuit boards.

10. The inductor according to claim 9, wherein some of the plurality of straight wires abut against a side surface of the magnetic core, and the others of the plurality of straight wires abut against another opposite side surface of the magnetic core.

11. The inductor according to any one of claims 1 to 10, wherein the magnetic core is of a ring shape or a long-strip shape, and surfaces of the plurality of conductors are coated with an insulation material.

12. An inverter circuit, comprising: four diodes D1, D2, D3, and D4 sequentially connected in series between a positive bus and a negative bus, four switching transistors Q1, Q2, Q3, and Q4 that correspond one-to-one to the four diodes and that are connected in parallel on two ends of the four diodes, two capacitors C1 and C2 connected in series between the positive bus and the negative bus, a filter inductor L, and a filter capacitor C, wherein one end of the filter inductor L is connected to an end at which D2 and D3 are interconnected, the other end is used to connect to a load, the filter capacitor C is configured to be connected in parallel on two ends of the load, one end of the filter capacitor C is connected to the other end of the filter inductor L, the other end of the filter capacitor C is grounded, and the filter inductor L is the inductor according to any one of claims 1 to 10.

13. A power supply conversion circuit, comprising:
a direct current power supply;
at least one switch unit; and
at least one induction unit, wherein the at least one induction unit corresponds one-to-one to the at least one switch unit, each of the at least one induction unit is connected to the direct current power supply by using a corresponding switch unit, and each induction unit comprises the inductor according to any one of claims 1 to 10.
